Europäisches Patentamt

European Patent Office

Office européen des brevets

(11) Publication number: **0 464 289 B1**

(19)

## EUROPEAN PATENT SPECIFICATION

(45) Date of publication of patent specification: **09.11.94**

(51) Int. Cl.[5]: **C01B 33/143**, C01B 33/148, C01B 33/151

(21) Application number: **90314449.1**

(22) Date of filing: **31.12.90**

(54) **Preparation of silica sols.**

(30) Priority: **02.07.90 US 546952**

(43) Date of publication of application:
**08.01.92 Bulletin 92/02**

(45) Publication of the grant of the patent:
**09.11.94 Bulletin 94/45**

(84) Designated Contracting States:
**AT BE CH DE DK ES FR GB GR IT LI LU NL SE**

(56) References cited:
**DE-C- 815 643**

**CHEMICAL ABSTRACTS, vol. 105, no. 20, 17th November 1986, page 158, abstractno. 175242u, Columbus, Ohio, US; & JP-A-61 158 810 (CATALYSTS AND CHEMICALS INDUS-TRIES CO., LTD) 18-07-1986 (Cat. D,A)**

**CHEMICAL ABSTRACTS, vol. 110, no. 22, 29th May 1989, page 166, abstract no.195757x, Columbus, Ohio, US; JP-A-63 285 112 (NISSAN CHEMICAL INDUSTRIES, LTD) 22-11-1988 (Cat. D,A)**

(73) Proprietor: **NALCO CHEMICAL COMPANY
One Nalco Center
Naperville Illinois 60563-1198 (US)**

(72) Inventor: **Payne, Charles C.
2545 Ridge Road
Aurora, Illinois 60504 (US)**
Inventor: **Jones, Robert D.
2038 Keim Drive
Naperville, Illinois 60565 (US)**

(74) Representative: **Harrison, David Christopher et al
MEWBURN ELLIS
York House
23 Kingsway
London WC2B 6HP (GB)**

## Description

Silica sols have been known for decades. Their use has included applications in paper manufacture as anti-skid agents, applications as a base compound to manufacture refractories, application in coatings, catalysts, investment casting, and in polishing agents for various industries, including electronics and especially in wafer polishing.

In each of these applications, but more critically in the applications including high technology investment casting, high temperature and strength refractories, the formation of specific catalyst bodies, in the coatings and electronics area, the use of silica sols that are contaminated with trace transition metals, alkali and alkaline earth metals, aluminum, and the like have caused difficulties. The presence of trace amounts of these metals often interferes with performance when contaminated silica sols are used.

These contaminating metals are particularly a nuisance when they include Na, K, alkali and alkaline earth metals such as Ca, Mg, and transition metals such as Fe, Cu, Mn, Ni, Zn, and the like. In general, any transition metal from groups IB, IIB, IIIB, IVB, VB, VIB, VIIB, and group VIII of the Periodic Table of Elements, if present in high enough concentrations, can cause difficulties in the final products manufactured with silica sols containing these contaminants.

Another metal which can cause difficulties, particularly in the manufacture of certain catalysts, is aluminum. If aluminum is present, and particularly if Fe, Ni, Cu, Mn, or Cr are also present, the silica sols often cannot meet the requirements for the final product, whether those requirements include use in catalysts, in refractories, in investment casts, or in electronic polishing agents used for electronic wafers.

It is an object of this invention to provide a method of manufacturing a silica sol that has extremely low values, particularly of Al, Fe, K, Na, and the other transition metals as described above.

The sol thus produced has discrete spherical particles, and finds particular use in high quality investment casting, high technology refractories, catalyst applications, electronic polishing agents, and in high technology coating applications.

The goal of obtaining these low metal sols has been pursued by others. Of particular note are two Japanese unexamined patent publications. First, a Japanese Kokai N° 61-158810, entitled "Method for Producing High-Purity Silica Sol" by Shokubai Kasei Kogyo KK. In this application, the alleged high-purity silica sols are prepared by a process requiring ionic exchange of a silicate liquid, followed by the addition of a strong inorganic acid, followed thereafter by ultra-filtration and back addition of $NH_3$ or an amine, followed by heating to produce what is referred to as a heat sol, and then adding the remaining part of the silicic acid solution slowly and dropwise to build particle size and effect the growth. There is no mention in this Japanese reference of the use of specific complexing agents to assist in the removal of transition metals, such as Fe, Ni, Cu, and the like, aluminum and such other metals contaminants as described above.

A second Japanese patent application, Kokai N° 63-285112, entitled "Process for Preparing High Purity Large Particle Size Silica Sol", by Nissan Kagaku KK, describes a process for preparing high-purity, large particle sized silica sols involving steps that treat an aqueous alkali metal silicate solution with strong cationic exchange resins to obtain a colloidal solution of active silicic acid, adjusting the pH of this silicic acid to from 0 to 2 and aging, followed by treating the solution with strongly acidic cationic exchange resins, followed by strongly basic anionic exchange resins, and further followed by another treatment with strongly acidic cationic exchange resins. To the silicic acid colloidal solution obtained, high-purity alkali metal hydroxide solutions are added, stabilizing the colloidal solution of silica at a pH of 7 to 8. This mixture is then heated and added to an aqueous high-purity alkali metal silicate solution, having a prescribed $SiO_2/M_2O$ molar ratio of 45 or less, with other process steps practised until the $SiO_2/M_2O$ ratio becomes 20:60. The particle growth is obtained by further heating and reaction, and finally, adding an acid equivalent to 40 to 90 percent of the alkali equivalent derived from the alkali metal hydroxide or alkali metal silicate and aging at temperature, followed, finally, by a concentration step through a micro-porous film. Again, there is no reference to specific complexing agents to assist in the removal of transition metals particularly, and there is a teaching of the stabilizing use of alkali metal silicates or alkali metal hydroxide solutions so that the final sol must be very high in alkali metal content, particularly sodium.

Finally, an old German Patentschrift, 815 643, owned by Farbenfabriken Bayer, Leverkusen, and invented by Dr. Viktor Hellmund, describes a process entitled, "Process for Removing Heavy Metals, Especially Iron, from Silica Sol". In this German process, iron present in the silica sol suspensions is converted to a complex form in which it is no longer bound by the silicic acid, and is removed from the silica sol by treating with an ion exchange resin. Oxalic acid is the preferable complex with iron, forming an anionic complex with iron, which complex is removed with the assistance of an anion exchange resin, The German process, however, is limited since it treats the silica sol for iron removal after the silica sol has already been formed. This does not permit the removal of contaminating iron or other transition metals

EP 0 464 289 B1

which have already been incorporated into the silica sol particle. The process is only capable of removing that iron which is still maintained in solution in the continuous aqueous phase surrounding the silica sol particle dispersion, or possible that iron present on the surface of the silica sol particle.

We have discovered an improved process and a method of manufacturing low-metal, ammonium-stabilized silica sol, which process comprises the steps:

(a) diluting a commercial grade sodium silicate solution with water to obtain a dilute sodium silicate solution containing from 5.0 to about 8.0 weight percent sodium silicate, as $SiO_2$; and then

b) exposing said dilute sodium silicate solution to a strong cation exchange resin in the acid form and in sufficient amount and with sufficient capacity to remove essentially all sodium values and other cation values contained in the dilute sodium silicate solution thereby forming a dilute silicic add solution, now containing from 5.0 to about 8.0 weight percent silicic acid as $SiO_2$; and then

(c) adding to the dilute silicic acid solution at least 0.10 weight percent based on $SiO_2$, of oxalic acid crystals and at least 0.25 weight percent, based on total silicic acid solution, of a strong inorganic acid chosen from the group consisting of $H_2SO_4$, HCl, $HNO_3$, and aqua regia, thereby forming an oxalate-containing, low pH silicic acid solution, which solution has a pH ranging from about 0.5 to about 2.5; and then

(d) mixing with or without cooling said oxalate-containing low pH silicic acid solution for about 0.5 to about 24 hours, recovering the aforesaid silicic acid solution which contains from about 5.0 to about 8.0 weight percent silicic acid, as $SiO_2$; and then

(e) exposing said aforesaid silicic acid solution to a strong anion exchange resin in the hydroxide form, and in sufficient amount and with sufficient capacity to replace essentially all negatively charged species contained therein with hydroxide ions, thereby forming an hydroxide-neutralized silicic acid solution having a pH ranging between about 2.5 to 4.0; and then

(f) exposing this hydroxide-neutralized silicic acid solution to a strong cation exchange resin in the acid form and in sufficient amount and with sufficient capacity to replace all positively charged species contained therein with hydrated protons, thereby forming a low-metal silicic acid solution; and then

(g) chilling said low-metal silicic acid solution to a temperature ranging between about 40° F. - 50° F., and storing, with or without stirring, for from one minute to about fifty (50) hours, thereby forming a chilled low-metal silicic acid solution; and then

(h) adding from 0 to 50 volume percent of the low-metal silicic acid solution to a preformed ammonium hydroxide solution made by adding concentrated ammonium hydroxide to deionized or softened water in sufficient quantity to achieve the pre-formed ammonium hydroxide solution having a pH ranging between about 8.0 to about 11.2, thereby forming an ammonium-neutralized silicic acid heel solution having a pH ranging between about 8.0 to about 11.2; and then

(i) heating said heel solution to a temperature ranging between about 75° C. to about 150° C., under sufficient pressure to prevent boiling, and then maintaining this temperature for from about 0.5 hours to about twenty-four (24) hours, while slowly adding, either continuously or incrementally with stirring, the remainder of the low-metal silicic acid solution, thereby reacting same with formed or forming silica sol particles, while simultaneously adding, either continuously or incrementally, sufficient ammonium hydroxide solution to maintain a pH ranging from about 8.0 to about 11.2, and finally forming a dilute ammonium-stabilized low-metal silica sol admixture; and then

(j) reacting this final admixture, at a temperature from 75° C. to about 150° C., at pressure sufficient to prevent boiling, for an additional 0.5 to about 8.0 hours, thereby forming a dilute, low-metals silica sol solution containing from about 2.0 to about 6.0 weight percent silica, as $SiO_2$; and then

(k) concentrating said dilute, low-metals silica sol solution to a concentrated low-metals, ammonium-stabilized silica sol having the following characteristics;

$SiO_2$ ranging from 15.0 - 55.0 weight percent as $SiO_2$,

pH ranging from 8.5 - 11.2

particle diameter ranging from 4.0 to 100 nm,

Al content < 100 ppm based on $SiO_2$,

Fe content < 50 ppm based on $SiO_2$,

Na content < 500 ppm based on $SiO_2$,

In the preferred method of manufacturing our low-metal ammonium-stabilized silica sols, a commercial grade sodium silicate solution containing from about 25 - 30 weight percent sodium silicate is diluted with water to a concentration ranging from about 6 to about 7.5 percent sodium silicate, thereby forming a dilute sodium silicate solution having a specific gravity ranging from about 1.04 to about 1.08. This dilute sodium silicate solution is reacted with a strong cationic exchange resin, exemplified by, for example, Dowex-HGR-W2, which is used in an acid form, or Dowex-650C, again used in the acid form. It is preferable to pass the

3

dilute sodium silicate solution through a column of the ion exchange resin at a rate ranging from about 0.13-0.27 $l/min/dm^3$ (1-2 gallons/min/cu.ft.) of collected resin. It is also preferable, though not absolutely necessary, to perform this ion exchange step at cooled temperatures ranging from about 4°-16°C (40°-60°F), preferably ranging from about 4°-10°C (40°-50°F) . This material that is collected after contact with the strong cation exchange rests is a dilute silicic acid solution containing from about five (5) to eight (8) weight percent silicic acid, as $SiO_2$, preferably from about six (6) to seven (7) weight percent silicic acid, as $SiO_2$. This so-called acid sol is then stirred, further chilled if necessary, to the temperatures mentioned above, that is from about 4°C (40°F) to about 16°C (60°F), and oxalic acid crystals are added thereto and dissolved therein. Addition of strong inoroganic acids follows, or may he done simultaneously, so that the pH of this acid sol is maintained below 2.0, preferably in the range of about 0.5 to about 2.0. The strong acid is preferably $H_2SO_4$, although it may be chosen from the group of any strong inorganic acid such as $H_2SO_4$, HCl, $H_3PO_4$, $HNO_3$, aqua regia, or mixtures thereof.

The oxalic acid crystals are added at a concentration of at least 0.10 weight percent oxalic acid, based on $SiO_2$ content, preferably at least 0.25 weight percent, based on $SiO_2$, and most preferably at a concentration of about 0.5 weight percent, based on $SiO_2$, or above. The strong acid is added at a rate of at least 0.25 weight percent, based on $SiO_2$, preferably at least 0.50 weight percent, based on $SiO_2$, and most preferably at a rate equal to about 1.0 weight percent, based on $SiO_2$. Most preferably the $H_2SO_4$ which is used in the preferred practise of our invention is added so as to account for one percent, based on the total weight of the starting acid sol solution being acidified. The pH of the acid sol at this point ranges typically from about 1.0 to about 1.8, but may range from about 0.5 to about 2.0. The addition of sulfuric acid and the metal complexing organic acid (oxalic acid) may be reversed with no ill effect.

Addition of the oxalic acid turns the acid sol, that is the dilute silicic acid solution, yellow-green. Further addition of $H_2SO_4$, or other strong acid, deepens the green colour. It is believed that the green colour is caused by oxalic acid complexes with metals, which complexes are most likely anionically charged. Preferably this oxalic acid-treated acid sol is allowed to age while maintaining cooling so that the temperature of this oxalic-containing silicic acid solution is maintained at a temperature ranging from 4°-16°C (40°-60°F), preferably between 4°-10°C (40°-50°F). The ageing process can range from about 0.5 hours to about twenty-four (24) hours, but preferably is in the range of one to about five hours, and most preferably, from about one to three hours. After this oxalate-containing silicic acid solution has aged, it is exposed to and contacted preferably with a very strong anion exchange resin in the hydroxide form and in sufficient amount and having sufficient capacity to remove and replace essentially all the negatively charged species present in the oxalate-stabilized silicic acid solution with hydroxide ions, thereby forming an hydroxide-neutralized silicic acid solution. A weak base anion exchange may be used as well.

Preferably the anion exchange resin is a Dowex-SAR resin or Dowex SBR resin in the hydroxide form, or a Dowex 550A resin, again in the hydroxide form. The oxalate-containing silicic acid solution is passed through this anion exchange resin at a rate comparable to 0.13-0.27 $l/min/dm^3$ (1-2 gallons/min/cu.ft) or resin. The silicic acid solution collected after contact with the anion resins is essentially free of oxalate anion metal complexes and is normally collected at a temperature ranging from about 45°-60°C and having a pH ranging from about 2.5 to about 4.0. This material exiting the anion exchange resin may be used directly to form the low metals silicon sols of this invention. Preferably, however, this material is immediately placed on a cation exchange resin column. The residual time period between exposure of this solution after deanionization to decationization on the cationic exchange resin is preferably no longer than fifteen minutes, and preferably is below ten minutes. Again the cationic exchange resin can be the Dowex HGR-W2, or Dowex 650C resins, all in hydrogen form.

The solution is passed through both the anion exchange resin beds and the cationic exchange resin beds at about 0.13-0.27 $l/min/dm^3$ (1-2 gallons/min/cu.ft) or resin. Although it is preferred that the deanionization of the oxalate/silicic acid solutions occur prior to the decationization, these processes can be reversed and still achieve very low metals content in the final silica sol product.

The effluent from the final deionization resin column is chilled to a temperature preferably ranging from about 4°-10°C (40°-50°F) and can be retained in storage at these chilled temperatures from zero minutes up to forty-eight hours, but preferably is maintained at from five minutes to twenty-four hours, and most preferably between about five minutes and about eight to ten hours. The chilled low-metal silicic acid solution obtained after the combined deanionization and decationization steps described above is extremely low in metals content, and is used to form a reaction heel and further used in silica sol particle growth steps to obtain the final low-metal, ammonium-stabilized silica sols of this invention.

The formation of the heel is done by adding from zero to fifty (0 - 50) volume percent, preferably from about one to about twenty volume percent of the chilled low-metal silicic acid solution to a preformed ammonium hydroxide solution made by adding concentrated ammonium hydroxide to deionized water in sufficient quantity to achieve a preformed ammonium solution having a pH ranging between about 8.0 to about 11.2. Preferably the pH of the preformed ammonium hydroxide solution used to form the heel ranges from about 9.0 to about 11.2, and most preferably ranges from about 10.0 to about 11.2. In actual practise, it is particularly preferred to begin with the ammonium hydroxide solution at a pH ranging from about 10.8 ± 0.5. This ammonium solution contains approximately 1.6 - 1.8 weight percent ammonium hydroxide in distilled water or deionized water. To this ammonium hydroxide solution, at ambient temperature or above, is added from zero to about fifty volume percent of the chilled low-metal silicic acid solution being stored at a temperature ranging preferably between 40° F. - 50° F, (or about 4° C - 10° C) thereby forming a "heel". This heel is then heated to a temperature ranging from 75° C. to about 150° C., maintaining that pressure necessary to prevent boiling. Preferably the heel is heated to a temperature of approximately 90° C. - 110° C., again with sufficient pressure to prevent boiling, and most preferably is heated to a temperature of about 97° C. ± 2° C. at more or less ambient pressures, but again preferably without boiling. These temperatures are maintained for a period of about 0.5 to about twenty-four hours, preferably from about one to ten hours, with stirring, to form an ammonium-stabilized growth silica sol to which then is added, incrementally or continuously, the remainder of the low-metal silicic acid solution maintained in storage after collection from the deanionization, decationization processes above. The addition of the low-metal silicic acid solution to the ammonium-stabilized silica sol heels can require from about one to about forty-eight hours, and normally requires from about four to about twenty-four hours. A temperature preferably in the range of 95° C. to 99° C. is maintained during addition of the low-metal silicic acid sol, and a pH ranging from about 8.0 to 11.2, preferably between about 9.0 - 11.2, is maintained by the addition of ammonium hydroxide solutions, since, as the acid sol is added to the heel, the pH drops, and additional ammonia or ammonium hydroxide solutions are added so as to maintain the pH between 8.0 - 11.2, preferably between about 8.0 - 11.2, and most preferably between about 9.5 - 11.0.

After all of the acid sol has been added, the reaction mixture is heated for an additional 0.5 to about 8.0 hours, at temperatures from about 75° C. to about 150° C., at pressures which avoid boiling, preferably at temperatures of 95° - 99° C., thereby permitting final particle size growth and silica sol particle formation. The procedures provide for discreet, primarily amorphous spherical silica sols which are extremely low in total metals content, as described later.

Depending upon a number of variables, including but not limited to the amount of acid sol originally used to form the heel, the rate of addition of the remaining acid sol, the reaction times and reaction temperatures, the pHs, the amount of ammonia added to maintain pHs, and the like, the ammonium-stabilized low-metal sols that form can have particle sizes ranging from about four to about one hundred thirty nanometers (4 - 130 nm), preferably have particle sizes ranging from about five to about fifty nanometers (5 - 50 nm). However, they can have particle sizes ranging from about thirty to about one hundred nanometers (30 - 100 nm), again depending upon the variables mentioned above.

At the end of the addition of the low-metal silicic acid solution to the pre-formed heel, which addition can require from about two to about twenty-four hours, depending on particle size desired, the final admixture is again held with agitation at a temperature preferably between 95° C. - 99° C. for a period ranging from about 0.5 to about 8.0 hours. This final reaction time is permitted to achieve the final particle size and particle size distribution desired and is preferably between about one to about six hours, especially if a particle size ranging from about five to about thirty nanometers (5 - 30 nm) is desired.

The dilute low-metal ammonium-stabilized silica sols are preferably concentrated by known technique to achieve a concentration of silica sol (as $SiO_2$) of from 15 - 55 weight percent, preferably from about 20 - 40 weight percent $SiO_2$. The concentration techniques can include evaporation, ultra-filtration, and other concentrating processes. The preferred process is to pass the dilute low-metal ammonium-stabilized silica sols through a membrane having a molecular weight cut-off ranging from about 30,000 to about 1,000,000, preferably from about 100,000 to about 500,000, and most preferably from about 180,000 to about 300,000.

The discrete spherical particles formed in this process are different from the chainlike particles that are formed in other processes attempting to achieve very low-metals silica sols. By stabilizing the silica sol with ammonium hydroxide and by using the oxalate complexing agents of this invention, a silica sol is formed having characteristics, after concentration, preferably by ultra-filtration, as follows:

silica, as $SiO_2$, 15 - 50 weight percent,

pH, as adjusted with ammonia, ranging between about 8.5 - 11.3,

particle diameter ranging from about 4.0 to 130 nm (nanometers).

These characteristics are further and primarily enhanced by the fact that this silica sol has less than 100 ppm Al, less than 50 ppm Fe, less than 500 ppm Na, all based on $SiO_2$. Preferably, and in certain conditions that form lower particle size, it is possible and we have, in fact, achieved silica sols having an $SiO_2$ concentration of about 30 ± 5 weight percent, having a pH of about 9.0 ± 0.5, particle diameters ranging from about five to about thirty nanometers (5 - 30 nm), and the following metal contents, based on $SiO_2$:

| Aluminum, as Al | < 50 ppm |
|---|---|
| Iron, as Fe | < 25 ppm |
| Sodium, as Na | < 500 ppm |

The processes of our invention can form silica sols which are low-metals, ammonium-stabilized silica sols having the following characteristics.

| $SiO_2$ | 25 - 35 weight percent |
|---|---|
| pH | 8.5 - 9.5 |
| Particle Diameter | 3.0 to 100 nm (nanometers) |
| Aluminum, as Al | < 90 ppm, based on $SiO_2$ |
| Iron, as Fe | < 50 ppm, based on $SiO_2$ |
| Potassium, as K | < 25 ppm, based on $SiO_2$ |
| Sodium, as Na | < 900 ppm based on $SiO_2$ |

Preferably, our invention can manufacture silica sols having the characteristics:

| $SiO_2$ | 30 ± 2.5 weight percent |
|---|---|
| pH | 9.0 ± 0.25 |
| Particle Diameter | 5 - 30 nm (nanometers) |
| Aluminum, as Al | < 30 ppm, based on $SiO_2$ |
| Iron, as Fe | < 15 ppm, based on $SiO_2$ |
| Potassium, as K | < 10 ppm, based on $SiO_2$ |
| Sodium, as Na | < 100 ppm based on $SiO_2$ |

Most preferably, silica sols can be made having the characteristics:

| $SiO_2$ | 30 ± 2.5 weight percent |
|---|---|
| pH | 9.0 ± 0.25 |
| Particle Diameter | 30 - 100 nm (nanometers) |
| Aluminum, as Al | < 30 ppm, based on $SiO_2$ |
| Iron, as Fe | < 15 ppm, based on $SiO_2$ |
| Potassium, as K | < 10 ppm, based on $SiO_2$ |
| Sodium, as Na | < 100 ppm based on $SiO_2$ |

Even large particle size silica sols can be made having the characteristics:

| $SiO_2$ | 30 ± 5 weight percent |
|---|---|
| pH | 9.0 ± 0.5 |
| Particle Diameter | 30 - 130 nm (nanometers) |
| Aluminum, as Al | < 50 ppm, based on $SiO_2$ |
| Iron, as Fe | < 25 ppm, based on $SiO_2$ |
| Potassium, as K | < 15 ppm, based on $SiO_2$ |
| Sodium, as Na | < 100 ppm based on $SiO_2$ |

To further exemplify our invention, the following experiments are given.

(1) A dilute sodium silicate solution was made with softened water and contained between 6 - 7 percent sodium silicate, as $SiO_2$, and had a specific gravity ranging between 1.07 - 1.08.

This solution was cooled to a temperature ranging from 4°-7°C (40°-45°F) and passed through a Dowex 650C hydrogen-form strong cation exchange resin at a rate of 0.13-0.27 l/min/dm$^3$ (1-2 gal-

lons/min/cu.ft) resin. The silicic acid solution formed following this ion exchange step was collected and stored in a tank capable of cooling this solution to a temperature ranging between 4°-7°C (40°-45°F). The acid sol obtained was contaminated with high iron and aluminum values and had a specific gravity of 1.036-1.042 and contained about 6-7 percent silicic acid, as $SiO_2$. This specific gravity was reduced by adding deionized water to a specific gravity of about 1.030 (approximately five percent by weight $SiO_2$) before further treatment.

To this solution, oxalic acid crystals were added with mixing. The oxalic acid was added so that the solution contained 0.5 weight percent oxalic acid based on silica present in the acid sol solution. The mixture turned a yellow-green colour and the colour intensified when concentrated $H_2SO_4$ was added to the mixture. The $H_2SO_4$ was added at one weight percent based on the total weight of the starting acid sol to which the $H_2SO_4$ was added.

In the above experiments, five gallons of metals-contaminated acid sol were treated with 16.8 g of oxalic acid and 195 g of concentrated $H_2SO_4$ respectively. The final pH ranged between 1.5 to about 1.8, as periodically checked with a standard pH meter. This oxalic acid-treated acid sol was allowed to age for about two hours while cooling to a temperature of approximately 7°C (45°F). After cooling and ageing this mixture, it was passed through a Dowex 550A hydroxide-form anionic exchange resin column, and then immediately on to and through a Dowex 650C hydrogen-form cationic exchange resin column at rates equal to from 0.13-0.27 l/min/dm$^3$ (1-2 gallons/min/cu.ft.) resin. This deanionization and decationization removed any solubilized and complexed metals and any additional sodium content which might have been initially present or added through contamination by contact with the resins. Although it does not appear to be critical, the most effective removal of metals seems to be achieved by passing the oxalate-containing silicic acid solution first through the anionic exchange resin followed by the cationic exchange resin. However, excellent results are also obtained by reversal of these steps so that this invention does anticipate passing the oxalate-containing silicic acid solution first through a cationic exchange resin followed by a anionic exchange resin. In fact, use of an anionic exchange resin alone can provide good results.

It is noted that passing the acid sol through the anionic exchange resin does effect the pH and the pH of the solution exiting the anionic exchange resin ranges from about 3 to about 5.0. It is believed that this solution should be immediately added to the cationic exchange resin, preferably at cooler temperatures ranging from about 4°C (40°F) to about 16°C (60°F). By doing so, gelation problems which could occur in the second cation exchange steps above can be avoided. It is known that higher temperatures or high silica concentrations can at this point cause gelation problems, and steps must be taken to avoid this gelation.

It is also entirely feasible to form mixed anion/cation exchange resin beds so that a single bed containing both anion and cation exchange resins of the types described earlier may be used together in a single operation. This should avoid any difficulties with gelation between separate steps as above described, but can cause later complexities when regenerating the mixed bed resins.

After the oxalate-containing acid sol was re-passed through both anion and cation exchange resin columns, the temperature was cooled to about 4°C-7°C (40°F-45°F) and this solution was stored for further use.

A reaction heel was formed by adding ammonium hydroxide to deionized water. The total volume of ammonium hydroxide solution can range from about one to about twenty volume percent of the low-metal silicic acid solution to be added. The deionized water used to form the ammonium hydroxide solution typically had a measured pH running between 5.8 to about 6.0 and sufficient concentrated ammonium hydroxide was added to this water to form a solution of ammonium hydroxide having a pH ranging between about 10.8 ± 0.5. In the process area, the low-metal silicic acid solution formed after passing through both anion and cation exchange resins was adjusted to have a specific gravity of 1.03 before addition to the ammonium solution. The ammonium-stabilized growth sol heel was prepared by adding approximately 720 g of a thirty percent ammonium hydroxide to 2,400 g of deionized water. To this dilute ammonium hydroxide, 94,722 g of metals-free silicic acid having a specific gravity of 1.030 was added, with stirring. The amount of silica added to the heel was calculated at 512 g as $SiO_2$. The amount of ammonia, as $NH_3$, was calculated at 0.194 weight percent. This starting heel was then heated to 96° C - 99° C. over a period of approximately forty-five minutes. A temperature of the heel was maintained at between about 97° C. - 98° C. in a reaction vessel equipped with a condenser and vented to an exhaust system. To the materials contained in this reaction vessel so equipped the remaining acid sol was slowly added. The amount of silica added equalled 4,698 g as $SiO_2$, as from the five weight percent acid sol formed after the combined decationization, deionization steps described earlier. This was added over a period of 486 minutes (8.1 hours) thereby achieving an $SiO_2$ addition rate of about 9.67 g $SiO_2$/min. The specific gravity of the acid sol being added varied between about 1.026 to about 1.032.

Ammonia, as a dilute ammonium hydroxide solution, was added as necessary to maintain the pH between about 8.0 to about 10.0, and temperature was maintained at 96° C. - 99° C.

After four hours into this addition/reaction, the product was sampled and particle size and pH measured. Samples were taken hourly thereafter. Particle size varied from about 8 nm up to about 12.5 nm over the reaction period monitored. After all of the acid sol had been added, the reaction mixture was post-heated for about one hour to insure total deposition of the acid sol on to the growing sol particles. Longer reaction times, up to twenty-four hours, can be used without causing difficulties.

This product was then concentrated to thirty weight percent silica as $SiO_2$ using an ultra-filtration membrane having a molecular weight cut-off of approximately 300,000. The pH dropped from approximately 10.0 to about 9.0 during concentration through the ultra-filtration membrane. Additional dilute ammonium hydroxide may be added dropwise to maintain the pH at the desired range.

The final product obtained in the laboratory using the above procedure, had a specific gravity of 1.212, a silica content of 31.3 % as $SiO_2$, a pH of 9.15, a conductivity of 2350 $\mu$s ($\mu$mhos), a viscosity of 31 cps, and an average particle diameter, as measured by titration, of 12,5 nm. This product also contained iron at 4.3 ppm, based on $SiO_2$, sodium at 25 ppm, based on $SiO_2$, chloride undetected, sulfate at 21 ppm, based on $SiO_2$, but had an aluminum content of 134 ppm, based on $SiO_2$. It was later determined that the aluminum content had been dramatically increased because of contamination of certain equipment used in the ultra-filtration step. Earlier analysis had indicated that the aluminum content prior to ultra-filtration was in the range of about 15 ppm, based on $SiO_2$.

To further demonstrate our invention, the following examples are presented: All experimental runs listed in the following Table I was performed in a five liter, three recked round bottom flask equipped with mechanical stirrer, condenser, and acid sol feed inlet (via Lapp pump). All preparations were heated - to about 98.4 ± 0.3° C. The starting heels were 750 ml volume of water to which ammonium hydroxide had been added, either by weight or by adding the ammonium hydroxide to achieve a preset pH. To this ammoniated water heel, acid sol was added either at ambient temperatures or at temperatures up to about 98 ± 1° C.

Low Metals Experiments 1-19

Acid sol, treated to remove all metals as before described, was then added at a given temperature and a controlled rate until the reaction mixture contained a total of 157.9 grams of $SiO_2$. After all acid sol was added, the vessel contents were heated at reaction temperature (98 ± 1° C) for at least four (4) hours. Results of Experiments 1-19 are presented in Table I.

Laboratory Experimental Data
(Dilute Solutions)

| Run No. | Heel pH | % Acid Sol in Heel | Final pH | Final Conductivity µS (µmhos) | Final Specific Gravity | Final Particle Diameter (nm) |
|---|---|---|---|---|---|---|
| 1 | 10.4 | 0 | 8.44 | 190 | 1.0264 | 23.3 |
| 2 | 11.0 | 0 | 9.64 | 471 | 1.024 | 27.4 |
| 3 | 10.9 | 0 | 9.50 | 350 | 1.019 | 20.4 |
| 4 | 10.9 | 20 | 9.19 | 348 | 1.0195 | 12.2 |
| 5 | 10.9 | 40 | 9.67 | 576 | 1.0195 | 10.0 |
| 6 | 10.9 | 50 | 9.46 | 516 | 1.0215 | 7.0 |
| 7 | 10.7 | 40 | 9.21 | 399 | 1.021 | 10.3 |
| 8 | 10.9 | 30 | 9.04 | 341 | 1.0205 | 11.0 |
| 9 | 10.9 | 25 | 9.76 | 629 | 1.019 | 10.8 |
| 10 | 10.9 | 25 | 9.72 | 647 | 1.0175 | 11.6 |
| 11 | 10.9 | 10 | 9.60 | 560 | 1.020 | 13.5 |
| 12 ① | 10.9 | 10 | 9.50 | 464 | 1.0235 | 16.5 |
| 13 | 10.9 | 10 | 9.21 | 301 | 1.0215 | 16.6 |
| 14 | 10.8 | 10 | 9.26 | 310 | 1.025 | 18.4 |
| 15 | 11.4 | 0 | 9.82 | 584 | 1.021 | 20.1 |
| 16 ① | 10.9 | 10 | 9.48 | 477 | 1.0215 | 17.4 |
| 17 ② | 10.9 | 5.68 | 9.65 | 442 | 1.0205 | 68 |
| 18 ③ | 10.9 | 10 | 9.59 | 460 | 1.0205 | 13.7 |
| 19 ② | 9.6 | 5.68 | 7.47 | 124 | 1.0245 | 15.8 |

1  Soft water in place of D. I. water

2  $SiO_2$ as 19.4 nm particles

3  18-hour feed time

In general;
(1) The higher the starting heel pH, the larger the particle size;
(2) The greater the amount of heel silica, the smaller the final particle size;
(3) Soft water and deionized water can be used interchangeably with no effect on particle size.
(4) Heel silica may be added at ambient or at reaction temperature with essentially no effect on particle size.
(5) Varying the rate of addition of acid sol within the range from 0.29 g $SiO_2$/minute to 0.146 g. $SiO_2$/minute has no effect on final particle size (reaction time of from 9-18 hours)
(6) A two-step process of growth results in much larger particle size. (see run #17)

Low Metals Scaled Experiments 20-25

Six pilot scaled batches were prepared in a 40 gallon epoxy lined reactor equipped with stirrer and recirculation loop in which a steam heated tube and shell heat exchanger was installed. Acid sol was added to the reactor via a metering pump, entering at the top of the reactor.
In all cases, the heel was composed of 23.32 liters of deionized water adjusted to a pH of from about 10.90 to about 10.95 (typically 0.5Kg of 28% $NH_3$ in water). A preset amount of acid sol was added to the ammoniated water to form the starting heel while this water was being circulated within the reactor at ambient temperature. The starting heel then was heated to 97.0 to 99.2° C and maintained for a total time of about 1 hour.

To this heated heel, acid sol, treated according to the invention, was fed into the reactor at a rate of 9.873 g $SiO_2$/minute until all $SiO_2$ acid sol had been added. The reaction mixture was maintained at reaction temperatures for an additional 6 hours. The resulting dilute product can be concentrated to approximately 25-35 wt%. $SiO_2$. The results are in Table II.

Table II

| EXPERIMENT NUMBER | HEEL pH | HEEL SILICA (kg) | BODY SILICA (kg) | TOTAL SILICA (nm) | PARTICLE SIZE |
|---|---|---|---|---|---|
| 20 | 10.9 | 0.426 | 4.871 | 5.297 | 16.2 |
| 21 | 10.9 | 0.426 | 5.244 | 5.670 | 19.4 |
| 22 | 10.9 | 0.426 | 4.658 | 5.084 | 16.6 |
| 23 | 10.9 | 0.533 | 4.829 | 5.362 | 14.0 |
| 24 | 10.9 | 0.426 | 4.510 | 4.936 | 15.5 |
| 25 | 10.9 | 0.533 | 4.798 | 5.331 | 11.9 |
| 26 | 10.9 | 0.512 | 4.697 | 5.209 | 12.5 |

In these scaled up runs the following observations were made:

(1) Increasing $SiO_2$ content of initial heel, all other variables being constant, decreased final average particle size.

(2) Increasing amount of body feed silica (from acid sol being fed after heel formation at reaction temperatures), all other variables being constant, increased the final average particle size.

(3) Acid sol for batches 20-23 and 26 was prepared by adding 0.5% oxalic acid (w/w) and 0.5% $H_2SO_4$ (w/w) to plant prepared acid sol. After a minimum of one hour the treated acid sol was ion exchanged by passing it through an anion exchange column, followed by a cation exchange column.

Comparison with Prior Disclosures

(4) Runs 24 and 25 acid sol preparation followed the same procedure as above, except the treated acid sol was first passed through the cation exchange column then the anion exchange column.

The following experiments demonstrated the preferred practice of our invention versus German 815,643, mentioned earlier and Japanese 63-285112, also mentioned earlier:

German 815.643

Patent Procedure

1. Pass Na - stabilized silica sol through hydrogen form of cation resin.
2. Add oxalic and/or mineral acid to pH 1-2. Let stand 2-3 hours.
3. Pass through hydrogen form of cation resin again.
4. Pass through hydroxide form of anion resin.
5. Add 0.1% ammonia as $NH_3$ to stabilize.

Actual Test

1. Pass 40% Na - stabilized silica sol through hydrogen and hydroxide form of the resins.
2. Add 0.5% oxalic and 1% $H_2SO_4$ based on product pH 1.5.
3. Wait 2-3 hours @ room temperature.
4. Pass through hydrogen and hydroxide form of the resins.
5. Realkalize with 0.1% ammonium carbonate for viscosity (based on product) and concentrated ammonium hydroxide to pH = 9.2.
6. Determine metal content.

Metal content is presented in Table III. The results are considerably poorer than the results from the practice of our invention.

TABLE III

| Metal Analysis of $NH_3$ - Stabilized Silica Sols Prepared Using the process in German Patent 815.643 | | |
|---|---|---|
| Metal | Test 1 | Test 2 |
| | ppm Level based on Silica | ppm Level based on Silica |
| Na | 820 | 930 |
| Al | 120 | 110 |
| Fe | 32 | 26 |

Japanese 63-285112

Japanese Procedure

1. Prepare 2-6% sodium silicate solution.
2. Pass through cation resin.
3. Add mineral acid to pH 0-2.0.
4. Age

5. Pass through cation then anion, then cation resin.

6. Add treated acid sol above to reagent grade caustic to zinc stabilized acid sol with pH 7-8 and $SiO_2/Na_2O$ ratio of 100- 300/ l mole ratio.

7. Prepare heel by adding treated acid sol above to reagent grade caustic to give metal silicate with $SiO_2/Na_2O$ ratio of 20-60/ l mole ratio and containing less than 8% (wt) silica.

8. Add material (step 6) to step 7 at temperature 90- 150°C to make sol.

9. Age sol at pH 2-5 40-90% of total alkaline content.

10. Concentrate sol using UF. (ultrafiltration)

Test Procedure

1. Prepare 5% sodium silicate solution.

2. Pass through Dowex HGR-W2H +.

3. Add regent grade $H_2SO_4$ to pH 1,5.

4. Age 1 hour.

5. Pass through

| HGR-W2, H + then | HGR-W2 (cationic resin) |
| SBR-OH then | SBR-OH (anionic resin) |
| HGR-W2, H + | HGR-W2 (cationic resin) |

6. Add reagent grade NaOH to pH 7-8 to above treated acid sol. Mole ratio $SiO_2/Na_2O$ is 100-300/l.

7. Prepare heel by adding treated acid sol above to reagent grade NaOH to give $SiO_2/Na_2O$ mole ratio of 20 - 60/l.

8. Add material from step 6 to step 7 at temperature 95-97°C to make sol.

9. Add reagent grade $H_2SO_4$ to hot sol to pH = 2. Age - 1 hour then cool to 50°C.

10. Pass through UF membrane having MWCO (molecular weight cutoff) of 300.000.

11. Determine metals content.

Though low metals sols are obtained the procedure required is complicated, time consuming, more costly, and more dependant on purity of ingredients used in each step. In addition Sodium levels are extremely high, (above about 800 ppm, based on $SiO_2$), a result which is not permitted in certain applications.

| Metal Analysis of Silica Sols Prepared using the Process in Japanese Application 63-285112 | | | |
|---|---|---|---|
| Metal | ICP Analysis Nissan Silica Sol | Test 1 | Test 2 |
| | | ppm Level based on Silica | ppm Level based on Silica |
| Al | 51 | 39.6 | 37.8 |
| Fe | 17.7 | 25.8 | 32.1 |

## Claims

1. A method of manufacturing a low metal ammonia stabilized silica sol which comprises:

(a) Diluting a sodium silicate solution with water to obtain a dilute sodium silicate solution containing from 5.0 to about 8.0 weight percent sodium silicate, as $SiO_2$;

b) Exposing said dilute sodium silicate solution to a strong cationic exchange resin in the acid form and in sufficient amount and with sufficient capacity to remove essentially all sodium values, thereby forming a dilute silicic acid solution, and containing from 5.0 to about 8.0 weight percent silicic acid as $SiO_2$; and then

(c) Adding to the dilute silicic acid solution at least 0.10 weight percent based on $SiO_2$ of oxalic acid and at least 0.25 weight percent, based on total silicic acid solution, of a strong inorganic acid chosen from the group consisting of $H_2SO_4$, $H_3PO_4$, HCl, $HNO_3$, and aqua regia, and mixtures thereof, to form an oxalate-containing silicic acid solution; and then

(d) Mixing with or without cooling said oxalate-containing silicic acid solution for about 0.5 to about 24 hours to recover a chilled oxalate/silicic acid solution having a temperature ranging between about 4°C (40°F) to about 16°C (60°F), and containing from about 5.0 to about 8.0 weight percent silicic acid, as $SiO_2$; and then

(e) Exposing said chilled oxalate/silicic acid solution to a strong anion exchange resin in the hydroxide form, and in sufficient amount and with sufficient capacity to replace essentially all negatively charged species contained therein with hydroxide ions to form an hydroxide-neutralized silicic acid solution;

(f) Exposing this hydroxide-neutralized silicic acid solution to a strong cationic exchange resin in the acid form and in sufficient amount and in sufficient capacity to replace all positively charged species contained therein with hydrated protons, thereby forming a low-metal silicic acid solution; and then

(g) Chilling said low-metal silicic acid solution to a temperature ranging between about 4°C-10°C (40°F-50°F), and storing, with or without stirring, for from one minute to about fifty hours, thereby forming a chilled low-metal silicic acid solution; and then

(h) Adding from zero to fifty volume percent of the chilled low-metal silicic acid solution to a pre-formed ammonium hydroxide solution made by adding concentrated ammonium hydroxide to deionized water in sufficient quantity to achieve the pre-formed ammonium hydroxide solution having a pH ranging between about 8.0 to about 11.2, thereby achieving an ammonium-neutralized silicic acid heel solution having a pH ranging between about 8.0 to about 11.2; and then

(i) Heating said heel solution to a temperature ranging between about 75°C. to about 150°C., under sufficient pressure to prevent boiling, and while maintaining this temperature, slowly adding, over a time period ranging from about 0.5 to about twenty-four hours with stirring, the remainder of the chilled low-metal silicic acid solution thereby reacting same with formed or forming silica sol particles in the heel, while simultaneously adding, as needed, ammonium hydroxide solution to maintain a pH ranging from about 8.0 to about 11.2, thereby forming a final admixture; and then

(j) Reacting the final admixture, at a temperature from 75°C. to about 150°C., at pressures sufficient to prevent boiling, for an additional 0.5 to about 8.0 hours, thereby forming a dilute, low-metals ammonium-stabilized silica sol solution; and then

(k) Concentrating said dilute, low-metals ammonium-stabilized silica sol solution to a final, low-metals, ammonium-stabilized silica sol having the following characteristics;

$SiO_2$ 15 - 55 weight percent as $SiO_2$
pH 8.5 - 11.2
Particle Diameter 4.0 to 130 nm (nanometers)
Aluminum, as Al < 100 ppm, based on $SiO_2$
Iron, as Fe < 50 ppm, based on $SiO_2$
Potassium, as K < 25 ppm, based on $SiO_2$
Sodium, as Na < 500 ppm based on $SiO_2$

2. The method of Claim 1 further comprising cooling the dilute sodium silicate solution in step (a) to a temperature ranging from 4°C (40°F) to about 16°C (60°F), and then maintaining this temperature range through steps (b) and (c) .

3. The method of Claim 1 or Claim 2 further comprising adding at step (c) at least 0.25 weight percent oxalic acid, based on $SiO_2$ and at least 0.5 weight percent $H_2SO_4$ to the dilute silicic acid solution formed in step (b).

4. The method of Claim 1 or Claim 2 further comprising reversing step (e) and step (f), and then proceeding with step (g) and subsequent steps.

5. The method of Claim 1 or Claim 2 further comprising forming the ammonium-neutralized silicic acid heel solution of step (h) by adding from 1 to about 20 volume percent of chilled low-metal silicic acid solution to the pre-formed ammonium hydroxide solution to achieve a heel solution containing at least 0.05 weight percent $NH_3$ and at least 0.10 weight percent $SiO_2$.

6. The method of Claim 1 or Claim 2 further comprising adding the remainder of the chilled low-metal silicic acid solution in step (i) to the heel solution of step (h) at a rate of at least 0.025 weight percent of total silica in final product per minute, and further comprising adding sufficient ammonium hydroxide to maintain the pH between about 9.5 to about 11.0.

7. The method of Claim 1 or Claim 2 which further comprises reacting the final admixture of step (j) at a temperature of from 90° C. - 99° C. for 1.0 to 8.0 hours and then passing the dilute low-metals ammonium-stabilized silica sol solution formed thereby through an ultra-filtration membrane having a molecular weight cutoff ranging from about 180,000 to about 300,000, thereby recovering a final, low-metals, ammonium-stabilized silica sol having the following characteristics:

$SiO_2$ 30 = 5 weight percent (as $SiO_2$)

pH 8.5 - 10.0

Particle Diameter 5 - 30 nm (nanometers)

Aluminum, as Al < 30 ppm, based on $SiO_2$

Iron, as Fe < 25 ppm, based on $SiO_2$

Potassium, as K < 10 ppm, based on $SiO_2$

Sodium as Na < 100 ppm based on $SiO_2$

## Patentansprüche

1. Verfahren zur Herstellung eines ammoniak-stabilisierten Silikasols mit geringem Metallgehalt, umfassend:

(a) das Verdünnen einer Natriumsilikatlösung mit Wasser, um eine verdünnte Natriumsilikatlösung zu erhalten, die 5,0 bis etwa 8,0 Gew.-% Natriumsilikat als $SiO_2$ enthält;

(b) das In-Kontakt-bringen der genannten verdünnten Natriumsilikatlösung mit einem starken Kationenaustauschharz in saurer Form und in ausreichender Menge sowie mit ausreichender Kapazität, um im wesentlichen das gesamte Natrium zu entfernen, wodurch eine verdünnte Kieselsäurelösung gebildet wird, die 5,0 bis etwa 8,0 Gew.-% Kieselsäure als $SiO_2$ enthält; und das anschließende

(c) Hinzufügen von zumindest 0,10 Gew.-% Oxalsäure, bezogen auf $SiO_2$, und von zumindest 0,25 Gew.-%, bezogen auf die gesamte Kieselsäurelösung, einer starken anorganischen Säure ausgewählt aus der Gruppe bestehend aus $H_2SO_4$, $H_3PO_4$, HCl, $HNO_3$ und Königswasser sowie Mischungen davon, zur verdünnten Kieselsäurelösung, um eine oxalathältige Kieselsäurelösung zu bilden; und das anschließende

(d) Mischen der genannten oxalathältigen Kieselsäurelösung mit oder ohne zusätzlichem Kühlen über einen Zeitraum von etwa 0,5 bis etwa 24 Stunden, um eine gekühlte Oxalat/Kieselsäurelösung mit einer Temperatur im Bereich zwischen etwa 4°C (40°F) und etwa 16°C (60°F) zu erhalten, die etwa 5,0 bis etwa 8,0 Gew.-% Kieselsäure als $SiO_2$ enthält; und das anschließende

(e) In-Kontakt-bringen der genannten gekühlten Oxalat/Kieselsäurelösung einem starken Anionenaustauschharz in Hydroxidform und in ausreichender Menge sowie mit ausreichender Kapazität, um im wesentlichen alle darin enthaltenen negativ geladenen Spezies durch Hydroxidionen zu ersetzen, um eine hydroxidneutralisierte Kieselsäurelösung zu bilden;

(f) In-Kontakt-bringen der hydroxidneutralisierten Kieselsäurelösung mit einem starken Kationenaustauschharz in saurer Form und in ausreichender Menge sowie mit ausreichender Kapazität, um alle darin enthaltenen positiv geladenen Spezies durch hydrierte Protonen zu ersetzen, um dadurch eine Kieselsäurelösung mit geringem Metallgehalt zu bilden; und das anschließende

(g) Abkühlen der genannten Kieselsäurelösung mit geringem Metallgehalt auf eine Temperatur im Bereich von etwa 4°C-10°C (40°F-50°F) und das Lagern mit oder ohne Rühren über einen Zeitraum von etwa einer Minute bis etwa 50 Stunden, um dadurch eine gekühlte Kieselsäurelösung mit geringem Metallgehalt zu bilden; und das anschließende

(h) Hinzufügen von 0 bis 50 Volum-% der gekühlten Kieselsäurelösung mit geringem Metallgehalt zu einer vorgebildeten Ammoniumhydroxidlösung, die durch Hinzufügen von konzentriertem Ammoniumhydroxid zu entionisiertem Wasser in ausreichender Menge, um eine vorgebildete Ammoniumhydroxidlösung mit einem pH-Wert im Bereich von etwa 8,0 bis etwa 11,2 zu erreichen, erhalten wurde, wodurch eine ammoniumneutralisierte Kieselsäurezwischenlösung mit einem pH-Wert im Bereich von 8,0 bis etwa 11,2 gebildet wird; und das anschließende

(i) Erwärmen der genannten Zwischen lösung auf eine Temperatur im Bereich von etwa 75°C bis etwa 150°C unter ausreichendem Druck zur Verhinderung des Siedens und langsames Hinzufügen des Rests der gekühlten Kieselsäurelösung mit geringem Metallgehalt, über einen Zeitraum im Bereich von 0,5 bis etwa 24 Stunden unter Rühren, wobei die Temperatur beibehalten wird, wodurch die Kieselsäurelösung mit den in der Zwischenlösung gebildeten oder sich bildenden Silikasolteilchen umgesetzt wird, während je nach Bedarf gleichzeitig Ammoniumhydroxidlösung zugegeben wird, um einen pH-Wert im Bereich von etwa 8,0 bis etwa 11,2 aufrechtzuerhalten, wodurch eine Endmischung gebildet wird; und das anschließende

(j) Reagierenlassen der Endmischung bei einer Temperatur von 75°C bis etwa 150°C bei Drücken, die zur Verhinderung des Siedens ausreichen, über einen Zeitraum von weiteren 0,5 bis etwa 8,0 Stunden, wodurch eine verdünnte, ammoniumstabilisierte Silikasollösung mit geringem Metallgehalt entsteht; und das anschließende

(k) Konzentrieren der genannten verdünnten ammoniumstabilisierten Silikasollösung mit geringem Metallgehalt, zu einem endgültigen ammoniumstabilisierten Silikasol mit geringem Metallgehalt, mit den folgenden Eigenschaften:

$SiO_2$ 15-55 Gew.-% als $SiO_2$
pH-Wert 8,5 - 11,2
Teilchendurchmesser 4,0 bis 130 nm (Nanometer)
Aluminium, als Al, < 100 ppm, bezogen auf $SiO_2$
Eisen, als Fe, < 50 ppm, bezogen auf $SiO_2$
Kalium, als K, < 25 ppm, bezogen auf $SiO_2$
Natrium, als Na, < 500 ppm, bezogen auf $SiO_2$.

2. Verfahren nach Anspruch 1, weiters umfassend das Abkühlen der verdünnten Natriumsilikatlösung in Schritt (a) auf eine Temperatur im Bereich von 4°C (40°F) bis etwa 16°C (60° F) und das Aufrechterhalten dieses Temperaturbereichs während der Schritte (b) und (c).

3. Verfahren nach Anspruch 1 oder Anspruch 2, weiters umfassend in Schritt (c) das Hinzufügen von zumindest 0,25 Gew.-% Oxalsäure, bezogen auf $SO_2$, von zumindest 0,5 Gew.-% $H_2SO_4$ zur in Schritt (b) gebildeten verdünnten Kieselsäurelösung.

4. Verfahren nach Anspruch 1 oder Anspruch 2, weiters umfassend das Umkehren der Schritte (e) und (f) und das anschließende Fortfahren mit Schritt (g) und den nachfolgenden Schritten.

5. Verfahren nach Anspruch 1 oder Anspruch 2, weiters umfassend das Bilden der ammoniumneutralisierten Kieselsäurezwischenlösung von Schritt (h) durch Hinzufügen von 1 bis etwa 20 Volum-% der gekühlten Kieselsäurelösung mit geringem Metallgehalt zur vorgebildeten Ammoniumhydroxidlösung, um eine Zwischenlösung zu bilden, die zumindest 0,05 Gew.-% $NH_3$ und zumindest 0,10 Gew.-% $SiO_2$ enthält.

6. Verfahren nach Anspruch 1 oder Anspruch 2, weiters umfassend das Hinzufügens des Rests der gekühlen Kieselsäurelösung mit geringem Metallgehalt in Schritt (i) zur Zwischenlösung von Schritt (h) mit einer Rate von zumindest 0,025 Gew.-% Gesamtsilika im Endprodukt pro Minute, und weiters umfassend das Hinzufügen von ausreichend Ammoniumhydroxid zur Aufrechterhaltung des pH-Werts zwischen etwa 9,5 und etwa 11,0.

7. Verfahren nach Anspruch 1 oder Anspruch 2, weiters umfassend das Reagieren lassen der Endmischung von Schritt (j) bei einer Temperatur von 90°C - 99°C über einen Zeitraum von 1,0 bis 8,0 Stunden und das anschließende Hindurchschicken der dadurch gebildeten verdünnten ammoniumstabilisierten Silikasollösung mit geringem Metallgehalt, durch eine Ultrafiltrationsmembran mit einem Molekulargewicht-Cutoff im Bereich von etwa 180.000 bis etwa 300.000, wodurch ein ammoniumstabilisiertes Endsilikasol mit den folgenden Eigenschaften gewonnen wird:

$SiO_2$ 30 ± 5 Gew.-% (als $SiO_2$)
pH-Wert 8,5 - 10,0
Teilchendurchmesser 5 - 30 nm (Nanometer)
Aluminium, als Al, < 30 ppm, bezogen auf $SiO_2$
Eisen, als Fe, < 25 ppm, bezogen auf $SiO_2$
Kalium, als K, < 10 ppm, bezogen auf $SiO_2$
Natrium, als Na, < 100 ppm, bezogen auf $SiO_2$.

**Revendications**

1. Méthode de fabrication d'un sol de silice stabilisé à l'ammoniaque à faible teneur en métaux qui consiste à :

(a) diluer une solution d'un silicate de sodium avec de l'eau pour obtenir une solution diluée de silicate de sodium contenant 5,0 à environ 8,0% en poids de silicate de sodium, sous la forme de

SiO$_2$ ;

(b) exposer ladite solution de silicate de sodium diluée à une forte résine échangeuse de cations sous sa forme acide et en une quantité suffisante et avec une capacité suffisante pour éliminer essentiellement tout le sodium et ainsi former une solution d'acide silicique diluée et contenant 5,0 à environ 8,0% en poids d'acide silicique sous la forme de SiO$_2$ ; et ensuite

(c) ajouter, à la solution d'acide silicique diluée, au moins 0,10% en poids, en se basant sur SiO$_2$, d'acide oxalique et au moins 0,25% en poids, en se basant sur la solution d'acide silicique totale, d'un acide inorganique fort choisi dans le groupe consistant en H$_2$SO$_4$, H$_3$PO$_4$, HCl, HNO$_3$ et aqua regia, et leurs mélanges, pour former une solution d'acide silicique contenant de l'oxalate ; et ensuite

(d) mélanger, avec ou sans refroidissement, ladite solution d'acide silicique contenant de l'oxalate pendant environ 0,5 à environ 24 heures pour récupérer une solution refroidie d'oxalate/acide silicique ayant une température comprise entre environ 4 ° C (40 ° F) et environ 16 ° C (60 ° F) et contenant environ 5,0 à environ 8,0% en poids d'acide silicique sous la forme de SiO$_2$ ; et ensuite

(e) exposer ladite solution refroidie d'oxalate/acide silicique à une forte résine échangeuse d'anions sous la forme d'hydroxyde et en une quantité suffisante et avec une capacité suffisante pour remplacer essentiellement toutes les espèces de charge négative qui y sont contenues par des ions hydroxydes pour former une solution d'acide silicique neutralisé par un hydroxyde ;

(f) exposer cette solution d'acide silicique neutralisée par un hydroxyde à une forte résine échangeuse de cations sous sa forme acide et en une quantité suffisante et à une capacité suffisante pour remplacer toutes les espèces positivement chargées qui y sont contenues par des protons hydratés et ainsi former une solution d'acide silicique à faible teneur en métal ; et ensuite

(g) refroidir ladite solution d'acide silicique à faible teneur en métal à une température comprise entre environ 4 ° C-10 ° C (40 ° F-50 ° F) et stocker, avec ou sans agitation, pendant une minute à environ quinze heures, pour ainsi former une solution refroidie d'acide silicique à faible teneur en métal ; et ensuite

(h) ajouter 0 à 50% en volume de la solution refroidie d'acide silicique à faible teneur en métal à une solution préformée d'hydrate d'ammonium obtenue par addition d'hydrate d'ammonium concentré à de l'eau désionisée en une quantité suffisante pour obtenir la solution préformée d'hydrate d'ammonium ayant un pH compris entre 8,0 et environ 11,2 pour ainsi obtenir une solution de fond de réservoir d'acide silicique neutralisé à l'ammonium ayant un pH compris entre environ 8,0 et environ 11,2 ; et ensuite

(i) chauffer ladite solution de fond de réservoir à une température comprise entre environ 75 ° C et environ 150 ° C, sous une pression suffisante pour prévenir l'ébullition et, tout en maintenant cette température, ajouter lentement, sur une période de temps comprise entre environ une demi-heure et environ vingt-quatre heures, tout en agitant, le restant de la solution refroidie d'acide silicique à faible teneur en métal pour ainsi la faire réagir avec les particules du sol de silice formé ou se formant dans le fond de réservoir, tout en ajoutant simultanément, selon la nécessité, une solution d'hydrate d'ammonium pour maintenir un pH compris entre environ 8,0 et environ 11,2 et ainsi former un mélange final ; et ensuite

(j) faire réagir le mélange final à une température de 75 ° C à environ 150 ° C à des pressions suffisantes pour prévenir l'ébullition, pendant une demi-heure à huit heures supplémentaires, pour ainsi former une solution d'un sol de silice dilué stabilisé à l'ammonium à faible teneur en métaux ; et ensuite

(k) concentrer ladite solution du sol de silice dilué stabilisé à l'ammonium à faible teneur en métaux en un sol de silice final stabilisé à l'ammonium à faible teneur en métaux et ayant les caractéristiques suivantes :

SiO$_2$ 15 - 55 pour cent en poids sous la forme de SiO$_2$

pH 8,5 - 11,2

Diamètre des particules 4,0 à 130 nm (nanomètres)

Aluminium sous la forme de Al < 100 ppm en se basant sur SiO$_2$

Fer sous la forme de Fe < 50 ppm en se basant sur SiO$_2$

Potassium sous la forme de K < 25 ppm en se basant sur SiO$_2$

Sodium sous la forme de Na < 500 ppm en se basant sur SiO$_2$.

2. Méthode de la revendication 1, consistant de plus à refroidir la solution de silicate de sodium diluée de l'étape (a) à une température comprise entre 4 ° C (40 ° F) et environ 16 ° C (60 ° F) puis maintenir cette température à travers les étapes (b) et (c).

**3.** Méthode de la revendication 1 ou de la revendication 2, consistant de plus à ajouter à l'étape (c) au moins 0,25% en poids d'acide oxalique en se basant sur $SiO_2$ et au moins 0,5% en poids de $H_2SO_4$, à la solution diluée d'acide silicique formée à l'étape (b).

**4.** Méthode de la revendication 1 ou de la revendication 2, consistant de plus à inverser l'étape (e) et l'étape (f) puis à passer à l'étape (g) et aux étapes subséquentes.

**5.** Méthode de la revendication 1 ou de la revendication 2, consistant de plus à former la solution de fond de réservoir d'acide silicique neutralisé à l'ammonium de l'étape (h) par addition de 1 à 20% en volume d'une solution refroidie d'acide silicique à faible teneur en métaux, à la solution préformée d'hydrate d'ammonium, pour obtenir une solution de fond de réservoir contenant au moins 0,05% en poids de $NH_3$ et au moins 0,10% en poids de $SiO_2$.

**6.** Méthode de la revendication 1 ou de la revendication 2, consistant de plus à ajouter le reste de la solution refroidie d'acide silicique à faible teneur en métaux de l'étape (i) à la solution de fond de réservoir de l'étape (h) à raison d'au moins 0,025% en poids de silice totale dans le produit final, par minute, et consistant de plus à ajouter suffisamment d'hydrate d'ammonium pour maintenir le pH entre environ 9,5 et environ 11,0.

**7.** Méthode de la revendication 1 ou de la revendication 2, qui comprend de plus la réaction du mélange final de l'étape (j) à une température de 90°C-99°C pendant 1,0 à 8,0 heures puis le passage de la solution diluée de sol de silice stabilisé à l'ammonium à faible teneur en métal ainsi formée à travers une membrane d'ultrafiltration ayant une coupure de poids moléculaire comprise entre environ 180 000 et environ 300 000, pour ainsi récupérer un sol de silice final stabilisé à l'ammonium à faible teneur en métaux ayant les caractéristiques suivantes :
$SiO_2$ 30 ± 5 pour cent en poids (sous la forme de $SiO_2$)
pH 8,5 - 10,0
Diamètre de particules 5 - 30 nm (nanomètres)
Aluminium sous la forme de Al < 30 ppm en se basant sur $SiO_2$
Fer sous la forme de Fe < 25 ppm en se basant sur $SiO_2$
Potassium sous la forme de K < 10 ppm en se basant sur $SiO_2$
Sodium sous la forme de Na < 100 ppm en se basant sur $SiO_2$.